# FASCICULE DE BREVET EUROPEEN

(11) **EP 1 374 586 B1**
(45) Date de publication et mention de la délivrance du brevet: **07.05.2008**
(21) Numéro de dépôt: 02722363.5
(22) Date de dépôt: 22.03.2002
(51) Int. Cl.: H04N 7/16, H04N 7/167

(54) **SYSTEME ET PROCEDE DE TRANSMISSION D'INFORMATIONS CHIFFREES A CLE CHIFFREE**
VORRICHTUNG UND VERFAHREN ZUR VERSCHLÜSSELTER DATENÜBERTRAGUNG MIT VERSCHLÜSSELTEM SCHLÜSSEL
SYSTEM AND METHOD FOR TRANSMITTING ENCRYPTED DATA WITH ENCRYPTION KEY

(30) Priorité: 30.03.2001 FR 0104342
(43) Date de publication de la demande: 02.01.2004
(73) Titulaire: Nagra Thomson Licensing, 92100 Boulogne-Billancourt (FR)
(72) Inventeur: DAUVOIS, Jean-Luc, F-75116 Paris (FR); MAILLARD, Michel, F-78120 Rambouillet (FR)
(74) Mandataire: Wenger, Joel-Théophile
(86) Numéro de dépôt international: PCT/FR2002/001010
(87) Numéro de publication internationale: WO 2002/080544

(56) Documents cités:
- EP-A- 0 984 629
- WO-A-99/07148
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

### Domaine technique

La présente invention concerne un système et un procédé de transmission d'informations sous une forme chiffrée. Elle concerne également la transmission d'une clé, également chiffrée, et utilisée pour le déchiffrement de l'information.

L'invention peut trouver des applications dans différents domaines -de la communication, mais vise en particulier les réseaux de distribution de services ou de programmes de télévision, généralement désignés par « télévision payante ».

### Etat de la technique antérieure.

La transmission chiffrée d'informations, et notamment de programmes ou de services de télévision payante, a lieu par exemple de la manière décrite dans la demande de brevet WO99/07148A entre une station émettrice d'un distributeur et une pluralité de stations réceptrices. Les stations réceptrices correspondent, pour l'essentiel, aux récepteurs de télévision des usagers, équipés d'un décodeur.

L'information, transmise par voie hertzienne, optique, ou électrique, est chiffrée au moyen d'une clé de façon à réserver son utilisation à un certain nombre d'abonnés, ou d'utilisateurs, auxquels cette information est destinée. Les utilisateurs disposent d'un équipement de déchiffrement, ou décodeur, capable de restituer à partir de l'information chiffrée, une information dite claire. L'information claire peut être enregistrée ou utilisée dans un téléviseur pour l'affichage d'images et la reproduction de sons.

Le déchiffrement des informations dans la station réceptrice a lieu en utilisant une clé qui doit correspondre à celle utilisée dans la station émettrice pour le chiffrement. La clé doit donc également être transmise aux utilisateurs pour être disponible dans les stations réceptrices.

Différentes possibilités sont offertes pour la distribution d'une clé de chiffrement/déchiffrement aux utilisateurs ou abonnés d'un distributeur de programmes télévisés. Toutefois, une solution simple consiste à transmettre la clé entre la station émettrice et les stations réceptrices au même titre que les informations chiffrées.

A cet effet, la clé doit elle-même être chiffrée pour éviter son utilisation non autorisée par des utilisateurs n'ayant pas souscrit à un abonnement approprié.

Les informations transmises entre la station émettrice et les stations réceptrices comprennent ainsi non seulement des informations sous la forme de données audio et/ou vidéo, mais également des messages de contrôle et de gestion de l'accès des utilisateurs à l'information, assortis de clés de chiffrement/déchiffrement.

Les messages de contrôle et de gestion de l'accès permettent de contrôler l'accès, pour un ou une pluralité d'utilisateurs, à l'information diffusée. Ces messages permettent encore de réserver différentes informations à différents utilisateurs ou abonnés.

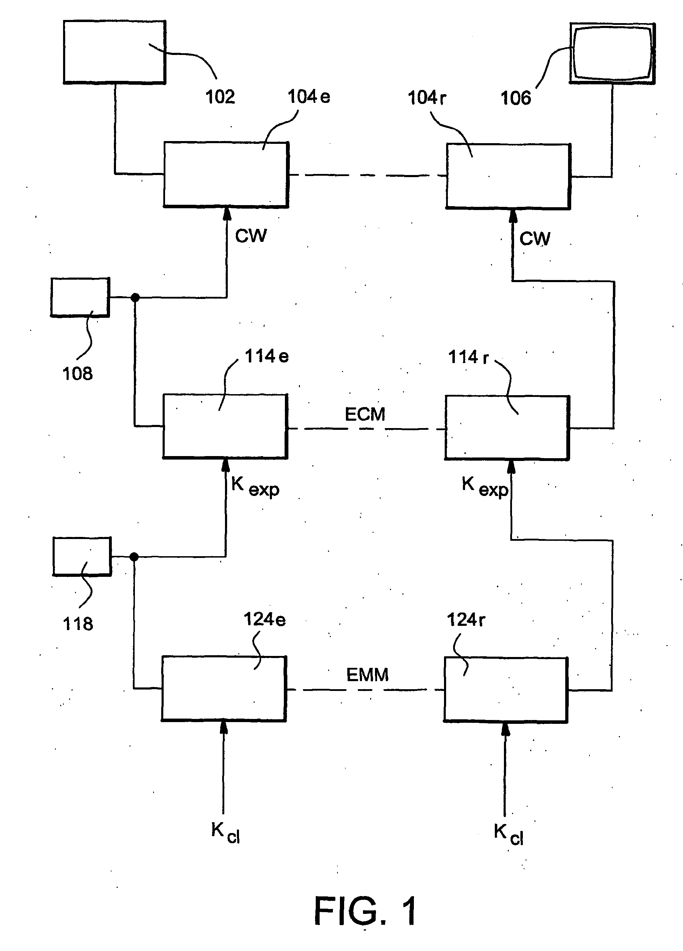

La figure 1 annexée illustre de façon schématique les principaux éléments d'un système connu de transmission d'informations.

Sur la partie gauche de la figure se trouvent les éléments d'une station émettrice, et sur la partie droite de la figure, les éléments d'une station réceptrice d'un utilisateur.

Certaines de ces parties sont reliées par une ligne en trait discontinue qui symbolise une transmission à distance d'informations, par exemple par voie hertzienne.

Une source de flux vidéo et/ou audio 102 est connectée à une première unité de chiffrement 104e de la station émettrice. Cette unité de chiffrement utilise une clé de codage, notée CW, pour chiffrer le flux vidéo/audio. Une clé de codage identique CW est utilisée dans une unité de déchiffrement 104r de la station réceptrice. Un téléviseur 106 est connecté à l'unité de déchiffrement 104r.

Un premier générateur de clé 108 est prévu dans la station émettrice pour générer les clés de codage CW. Il s'agit, par exemple d'un générateur aléatoire.

Une deuxième unité de chiffrement 114e de la station émettrice est prévue pour le chiffrement de la clé de codage CW. La deuxième unité de chiffrement délivre des informations chiffrées qui sont des messages de contrôle d'accès notés ECM (Entitlement Control Message). Les messages ECM contiennent la clé de codage CW chiffrée et des informations descriptives du programme vidéo ou audio diffusé. Les messages ECM sont reçus dans les stations réceptrices et y sont déchiffrés par une deuxième unité de déchiffrement 114r. La deuxième unité de déchiffrement fournit la clé de codage CW nécessaire à la première unité de déchiffrement pour déchiffrer le flux vidéo/audio. La clé CW est extraite des messages ECM après leur déchiffrement.

Le chiffrement des messages ECM dans la station émettrice, de même que leur déchiffrement dans la station réceptrice a lieu au moyen d'une autre clé désignée par clé d'exploitation et notée Kexp. La clé d'exploitation est fournie par exemple par un deuxième générateur de clés 118.

Comme la clé d'exploitation doit également être fournie à un grand nombre d'utilisateurs, une solution pour sa distribution consiste à la diffuser entre la station émettrice et les stations réceptrices au même titre que les autres informations.

Comme cette clé doit être réservée à certains utilisateurs ou abonnés, elle est également chiffrée par une troisième unité de chiffrement 124e.

La troisième unité de chiffrement délivre des messages de gestion d'accès notés EMM (Entitlement Management Message). Ces messages contiennent, outre la clé d'exploitation chiffrée, des données de gestion des droits des utilisateurs. Ces données permettent de déterminer, par exemple, pour chaque utilisateur ou groupe d'utilisateurs, le type de programmes ou d'émissions pour lesquels un abonnement a été souscrit. Les messages EMM sont transmis vers les stations réceptrices et y sont déchiffrés par des troisièmes unités de déchiffrement 124r qui fournissent la clé d'exploitation Kexp aux deuxièmes unités de déchiffrement 114r.

La troisième unité de chiffrement 124e de la station émettrice et les troisièmes unités de déchiffrement 124r des stations réceptrices utilisent une clé désignée par clé client et notée Kcl.

Il convient de noter que, si la clé de codage CW et les messages ECM sont partagés par un grand nombre d'utilisateurs, voire tous les utilisateurs, les messages EMM et les clés client Kcl sont propres à un unique utilisateur ou à un nombre restreint d'utilisateurs.

Dans la mesure où les messages EMM et ECM sont diffusés par les mêmes voies de diffusion que l'information vidéo et audio, on voit apparaître des problèmes d'encombrement de la bande passante de transmission disponible pour ces messages. Les messages ECM, communs à un grand nombre d'utilisateurs, peuvent être diffusés fréquemment et peuvent donc véhiculer des clés de décodage changeant rapidement. Le changement rapide des clés permet de limiter le risque de leur copie pour une utilisation frauduleuse.

En revanche, les messages EMM, et les clés d'exploitation qu'ils véhiculent, sont propres à des groupes d'utilisateurs bien plus réduits, ou destinés à des utilisateurs individuels. Ainsi, leur diffusion fréquente pour chaque utilisateur et leur renouvellement rapide ne sont pas possibles dans une bande de transmission allouée pour la transmission des informations.

A titre d'exemple, la clé de codage est généralement modifiée avec une période de quelques secondes et les messages ECM sont transmis toutes les secondes. La clé d'exploitation est généralement modifiée une fois par mois et les messages EMM sont transmis une fois par heure. Enfin, les clés client Kcl sont généralement immuables.

Dans les stations réceptrices, une partie des dispositifs peut être intégrée dans une carte électronique du type carte à puce. Une telle carte comprend, par exemple, les deuxième et troisième unités de déchiffrement et les moyens de gestion des différentes clés. La clé client peut être inscrite à demeure dans la carte à puce. Les clés d'exploitation et de décodage peuvent y être mémorisées temporairement jusqu'à leur renouvellement.

Les cartes à puce des stations réceptrices comportent à cet effet un microprocesseur et des mémoires de stockage de données. Les mémoires permettent notamment le stockage des clés pour le déchiffrement.

Le système de transmission d'informations n'est pas à l'abri d'une utilisation non autorisée consistant à copier dans une carte à puce vierge une ou plusieurs clés.

Le piratage de la carte à puce des stations réceptrices peut être a priori effectué à différents étages, c'est-à-dire en utilisant l'une des différentes clés. Selon le cas, différentes contraintes apparaissent.

La copie de la clé client pour la réception des messages EMM est liée à un risque pour le contrefacteur d'être identifié. En effet, la clé client et les messages EMM sont propres à chaque utilisateur ou à des groupes réduits d'utilisateurs. Il serait ainsi possible pour le diffuseur d'inhiber dans la station émettrice l'émission de nouveaux messages EMM pour ces utilisateurs.

Le risque d'identification de l'utilisateur indélicat est en revanche impossible lorsque les clés de codage CW sont copiées. Toutefois, le caractère peu pérenne de ces clés rend le travail de contrefaçon infructueux.

Le principal risque de copie concerne ainsi les messages EMM qui contiennent la clé d'exploitation. Comme cette clé reste inchangée pour une période relativement longue, de l'ordre du mois, sa diffusion par un système hypermédia (internet) permettrait une utilisation frauduleuse par un nombre d'utilisateurs élevé.

### Exposé de l'invention.

L'invention a pour but de proposer un système et un procédé de transmission d'information permettant de réduire de façon importante les risques d'une utilisation frauduleuse.

Un but de l'invention est également d'augmenter le coût d'une carte à puce visant à émuler frauduleusement le fonctionnement d'une station de réception.

Un but de l'invention est en outre de préserver un maximum de bande de transmission pour la transmission des informations vidéo et audio en évitant de la limiter par l'envoi répété de messages ou de clés de chiffrement.

Pour atteindre ces buts, l'invention a plus précisément pour objet un procédé de transmission d'informations entre une station émettrice et une pluralité de stations réceptrices dans lequel on transmet de la station émettrice vers les stations réceptrices des informations chiffrées avec une première clé, et au moins un message (de contrôle) vecteur d'une deuxième clé, et dans lequel on déchiffre les informations chiffrées dans les stations réceptrices avec la première clé ou une clé sensiblement identique à la première clé. Conformément à l'invention, la première clé, ou la clé sensiblement identique à la première clé, est établie dans les stations réceptrices à partir de la deuxième clé et d'au moins une donnée sélectionnée parmi un ensemble de données disponibles dans les stations réceptrices, en fonction d'une commande de sélection transmise périodiquement entre la station émettrice et les stations réceptrices.

Au sens de l'invention, on entend par informations, toutes les données ou signaux susceptibles d'être échangés entre une station émettrice et une station réceptrice. Il peut donc s'agir aussi bien de données vidéo ou audio, que des codes ou des clés, ou encore de messages de contrôle. Les messages de contrôle sont, par exemple, des messages servant à décrire des programmes de diffusion ou des prestations offertes aux utilisateurs, et servant à gérer l'accès individuel ou collectif des utilisateurs à ces prestations.

Grâce à l'invention, au moins l'une des clés qui est transmise entre la station émettrice et les stations réceptrices, n'est pas une clé directement utilisable pour effectuer un déchiffrement. Comme indiqué ci-dessus, la clé qui convient au déchiffrement, c'est-à-dire la première clé, est reconstruite dans les stations réceptrices à partir de la seconde clé et à partir d'une ou de plusieurs données susceptibles d'être sélectionnées dans un ensemble de données supplémentaires.

Les données susceptibles d'être sélectionnées se trouvent dans les stations réceptrices. Elles se trouvent, par exemple, dans la carte à puce, si une station réceptrice est équipée d'une telle carte.

Le fait que la sélection des données prises en compté pour l'établissement de la première clé soit périodiquement renouvelée et qu'elle concerne un ensemble de données plus vaste qu'une simple clé, la copie frauduleuse d'une carte à puce nécessite une capacité de mémoire du même ordre d'importance que la capacité de mémoire disponible dans les stations réceptrices. Elle suppose aussi la mise à jour continue de l'ensemble des données.

Ces contraintes importantes tendent à augmenter le coût des cartes à puce copiées ou de la reproduction frauduleuse du contenu des stations réceptrices.

Selon une mise en oeuvre particulière de l'invention, qui tend à protéger le système contre une fraude portant sur la clé d'exploitation, sensible en raison de sa période de renouvellement relativement longue, les informations transmises et visées par l'invention, telle que définie ci-dessus sont principalement les messages de contrôle d'accès ECM. On rappelle que ces messages sont vecteurs de la clé de code CW utilisée pour le chiffrement et le déchiffrement des données audio et vidéo, notamment. La première clé est alors la clé d'exploitation.

La commande de sélection utilisée pour sélectionner les données nécessaires en outre à la formation de la première clé peut être transmise entre la station émettrice et les stations réceptrices en étant chiffrée ou non. Elle ne contient en effet aucune information exploitable en soi, c'est-à-dire en dehors du contenu de tout ou partie des mémoires des stations réceptrices.

Dans une autre possibilité de mise en oeuvre de l'invention qui, par ailleurs, n'est pas exclusive de celle exposée ci-dessus, les informations chiffrées visées par l'invention peuvent comporter principalement les données vidéo et/ou audio. Dans ce cas, la première clé est la clé de code CW.

L'invention concerne également un système de transmission d'informations entre une station émettrice et une pluralité de stations réceptrices. Le système comprend, dans la station émettrice, au moins un dispositif de chiffrement d'informations avec une première clé et, dans chaque station réceptrice, un dispositif de déchiffrement selon la même clé.

Le système de transmission fonctionne selon le procédé exposé. A cet effet, chaque station réceptrice comprend des moyens pour établir la première clé chiffrée à partir d'une deuxième clé transmise depuis la station émettrice et à partir d'au moins une donnée sélectionnée parmi un ensemble de données mémorisées, en fonction d'un signal de sélection émis par la station émettrice.

Conformément à l'invention, et de la façon déjà évoquée ci-dessus, au moins l'une des clés, par exemple la clé d'exploitation, n'est jamais transmise entre la station émettrice et les stations réceptrices. La clé qui est transmise, en l'occurrence la deuxième clé, est inutilisable telle quelle pour procéder au déchiffrement.

Lorsque la première clé est la clé d'exploitation, les informations chiffrées considérées comportent des messages de contrôle d'accès (ECM) vecteurs d'une troisième clé (CW) utilisée pour le chiffrement d'un flux de données comprenant des données audio et/ou vidéo.

Selon une autre possibilité, non exclusive de la précédente, la première clé peut être aussi une clé de chiffrement/déchiffrement de données audio et/ou vidéo. Dans ce cas, les informations chiffrées considérées comportent les données audio et/ou vidéo.

Les stations réceptrices peuvent être conçues pour stocker un ensemble de données susceptibles d'être sélectionnées en réponse à la commande de sélection. Ces données peuvent être inscrites en tout ou partie dans une mémoire fixe.

Cependant, dans une réalisation préférée du système de transmission, une partie ou l'ensemble des données susceptibles d'être sélectionnées peuvent être stockées dans une mémoire réinscriptible. Cette particularité autorise le renouvellement de ces données et constitue ainsi un obstacle supplémentaire à la contrefaçon des stations réceptrices.

Les stations réceptrices peuvent encore comporter des moyens de sélection comportant éventuellement une table de pointeurs dirigés vers des adresses de mémoire.

Les moyens de sélection peuvent réaliser la sélection de façon directe, par exemple, en fonction d'adresses de données à sélectionner, transmises depuis la station émettrice, ou par l'intermédiaire d'une table de pointeurs propre à chaque station réceptrice. Les pointeurs peuvent alors être dirigés vers des adresses différentes dans les différentes stations réceptrices. Dans ce cas, les données nécessaires à l'établissement des clés peuvent ne pas être stockées à la même adresse dans les différentes stations réceptrices mais peuvent être distribuées variablement dans l'ensemble de la mémoire allouée au stockage de ces données. Cette particularité augmente également la difficulté de copie du contenu des stations réceptrices.

Il est en outre possible de répartir parmi les données stockées, susceptibles d'être sélectionnées ou non, des données d'identification de l'utilisateur. Ces données permettent, en cas de copie frauduleuse, d'identifier l'utilisateur indélicat et d'inhiber le fonctionnement des stations réceptrices correspondantes. L'inhibition de certaines stations peut avoir lieu par exemple en cessant la transmission de message de gestion d'accès EMM pour ces stations.

D'autres caractéristiques et avantages de l'invention ressortiront de la description qui va suivre, en référence aux figures des dessins annexés. Cette description est donnée à titre purement illustratif et non limitatif.

### Brève description des figures

- La figure 1, déjà décrite, est une représentation schématique et simplifiée d'un système de transmission d'informations chiffrées, de type connu.
- La figure 2 est une représentation schématique et simplifiée d'un système de transmission d'informations chiffrées, conforme à l'invention.

### Description détaillée de modes de mise en oeuvre de l'invention.

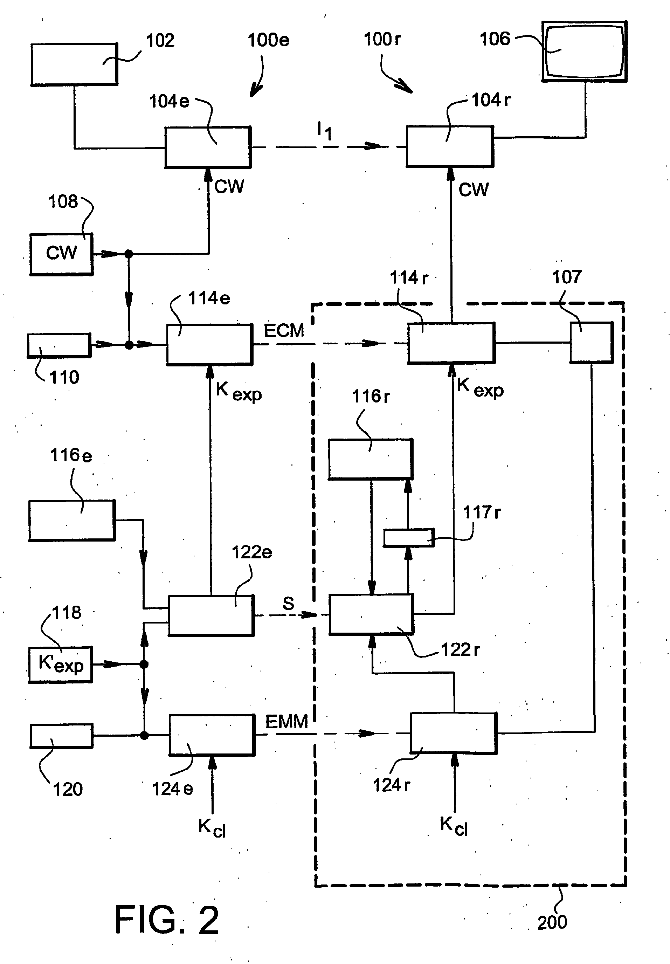

Dans la description qui suit, en référence à la figure 2, des éléments identiques, similaires ou équivalents aux éléments déjà décrits de la figure 1 sont repérés avec les mêmes références numériques.

On retrouve en particulier sur la figure 2 une source 102 de flux vidéo et/ou audio d'une station émettrice 100e d'un distributeur. La station émet un flux d'informations chiffrées I₁ , sous la forme, par exemple, de données vidéo ou audio, vers une pluralité de stations réceptrices 100r. La figure ne représente, pour des raisons de clarté, qu'une seule station réceptrice, à laquelle il est fait référence dans la suite du texte. Dans des applications de télévision payante, le nombre de stations réceptrices est cependant très élevé, et correspond, par exemple, au nombre d'abonnés.

Il convient de préciser que des informations autres que les données audio et/ou vidéo peuvent être émises dans le flux I₁. Il s'agit par exemple d'applications interactives, de données temporelles,_de programmes etc.

Une unité de chiffrement 104e de la station émettrice permet de chiffrer des informations émises et une unité de déchiffrement 104r de la station réceptrice 100r permet de les déchiffrer, par exemple en vue de leur restitution sur un téléviseur 106.

Le chiffrement et le déchiffrement ont lieu en utilisant une clé de code, notée CW par analogie avec la figure 1. La clé de code CW est générée par un générateur 108. Elle est associée à un descripteur de l'information du flux I₁, fourni par une unité 110 puis est transmise de façon chiffrée sous la forme d'un message ECM. Le descripteur indique, par exemple, le contenu d'un programme télévisé transmis.

Les messages ECM constituent. également des informations chiffrées au sens de l'invention. On peut se reporter à la partie introductive du texte pour une description plus détaillée des messages ECM.

Le chiffrement et le déchiffrement des messages ECM sont exécutés respectivement dans des unités 114e et 114r de la station émettrice et de la station réceptrice. Le chiffrement et le déchiffrement ont lieu au moyen d'une clé dite d'exploitation notée Kexp, par analogie avec la figure 1.

Cependant, et contrairement au système illustré par la figure 1, la clé d'exploitation n'est pas transmise entre la station émettrice et les stations réceptrices.

La clé d'exploitation Kexp est construite à partir d'une deuxième clé d'exploitation notée K'exp fournie par un générateur de clés 118, et à partir d'une ou de plusieurs données prises dans un ensemble de données stockées dans une mémoire 116e. Les données disponibles dans la mémoire 116e sont identiques à un ensemble de données stockées dans une mémoire 116r de chaque station réceptrice. Il convient de préciser que les mémoires 116e et 116r peuvent être des mémoires uniques ou être formées de différentes mémoires de différents types (ROM, RAM, EEPROM etc.).

Une unité de calcul 122e est prévue pour sélectionner des données dans la mémoire 116e et pour combiner ces données avec la deuxième clé d'exploitation K'exp pour former la clé d'exploitation Kexp destinée à l'unité de chiffrement 114e. La combinaison peut se résumer à une simple juxtaposition des données ou être une combinaison plus complexe. L'unité 122e forme également un message S de commande de sélection qui contient par exemple les adresses des données sélectionnées dans la mémoire. Ce message S est transmis à l'ensemble des stations réceptrices de manière chiffrée ou non.

Par ailleurs, une unité de chiffrement 124e reçoit la seconde clé d'exploitation K'exp et des données de gestion des droits des utilisateurs fournis par une unité 120. Ces données de gestion des droits décrivent, par exemple, pour un utilisateur particulier, ou un groupe d'utilisateurs, le type de programme pour lequel il a souscrit un,abonnement. Les données de gestion des droits et la seconde clé d'exploitation K'exp sont contenues dans des messages de type EMM.

Comme le montre la figure 2, le message de commande de sélection S est reçu par un calculateur 122r de la station de réception. Le calculateur 122r reçoit également la seconde clé d'exploitation K'exp après déchiffrement des messages EMM dans une unité de déchiffrement 124r. Le calculateur 122r lit dans la mémoire 116r des données en fonction de la commande de sélection S, et combine ces données à la seconde clé d'exploitation K'exp, de la même manière que la calculateur 122e de la station émettrice, pour former la clé d'exploitation Kexp destinée à l'unité de déchiffrement 114r.

Le message de commande de sélection, émis par la station émettrice vers les stations réceptrices, peut contenir, par exemple, une adresse ou un jeu d'adresses indiquant l'endroit de la mémoire 116r auquel une donnée utilisée pour la formation de la clé d'exploitation doit être lue. Dans ce cas, le contenu et l'agencement d'au moins une partie de l'espace de mémoire doivent être identiques dans toutes les stations réceptrices.

Cependant, selon un perfectionnement, les stations réceptrices peuvent comporter une table de pointeurs 117 et les commandes de sélection peuvent désigner l'un des pointeurs de la table. Ce pointeur peut alors être dirigé vers des adresses différentes dans différentes stations réceptrices tout en obtenant finalement les mêmes données pour la formation de la clé d'exploitation. Ce perfectionnement permet de disposer dans les différentes stations réceptrices des contenus de mémoire apparemment différents, ou tout au moins des contenus agencés différemment. Ceci augmente la difficulté de leur reproduction frauduleuse.

Selon un autre perfectionnement, déjà évoqué, le contenu des mémoires peut comporter des données d'identification de l'utilisateur susceptibles d'être mises à profit pour identifier un éventuel contrefacteur.

Enfin, les EMM transmis entre la station émettrice et les stations réceptrices peuvent comporter des données devant être stockées dans la mémoire 116r ou des données de remplacement de données déjà existantes dans la mémoire 116r. Ces mêmes données sont également enregistrées dans la station émettrice, par exemple dans la mémoire 116e, de façon à pouvoir servir comme données pour l'établissement de la clé d'exploitation.

La référence 107 sur la figure 2 désigne un circuit de test susceptible de recevoir les messages ECM et/ou EMM. Ce circuit est destiné à contrôler, pour chaque utilisateur, sa qualité d'abonné pour la réception des programmes diffusés. Un tel circuit, connu en soi, peut interdire le déchiffrement du flux d'informations Il lorsque des messages EMM ne sont plus transmis pour un utilisateur donné qui aura été identifié comme un utilisateur non autorisé.

Dans les stations réceptrices, au moins une partie des composants peuvent être intégrés dans une carte à puce. Sur la figure 2 un certain nombre de composants sont entourés par une ligne en trait discontinue. Ces composants font, par exemple, partie d'une carte à puce 200. On observe, en particulier, que la carte à puce 200 peut comporter la clé client Kcl utilisée pour le déchiffrement des messages EMM. Celle-ci peut être mémorisée ou câblée.

Une reproduction frauduleuse de la carte à puce nécessite la copie de l'ensemble des données de la mémoire ou des mémoires 116r. La capacité et la répartition des mémoires est par exemple la suivante : RAM :32ko, EEPROM :32ko, RAM :1ko. De surcroît, le contenu de la mémoire EEPROM doit continuellement être mis à jour et distribué par le contrefacteur à tous les utilisateurs indélicats, ce qui représente un flux de données important. Ces contraintes rendent la reproduction de la carte à puce économiquement inintéressante ou tout au moins en réduisent considérablement l'intérêt.

## Revendications

1. Procédé de transmission d'informations entre une station émettrice (100e) et une pluralité de stations réceptrices (100r), dans lequel on transmet de la station émettrice vers les stations réceptrices des informations chiffrées (ECM) avec une première clé (Kexp), et au moins un message (EMM) vecteur d'une deuxième clé (K'exp), et dans lequel on déchiffre les informations chiffrées dans les stations réceptrices au moyen de la première clé ou d'une clé sensiblement identique à la première clé, **caractérisé en ce que** la première clé(Kexp), ou la clé sensiblement identique à la première clé, est établie dans les stations réceptrices à partir de la deuxième clé (K'exp) et d'au moins une donnée sélectionnée parmi un ensemble de données (116n) disponibles dans les stations réceptrices, en fonction d'une commande de sélection transmise périodiquement entre la station émettrice et les stations réceptrices.

2. Procédé selon la revendication 1 **caractérisé en ce que** la première clé(Kexp), ou la clé sensiblement identique à la première clé, est établie dans les stations émettrices et réceptrices à partir de la deuxième clé (K'exp) et d'au moins une donnée sélectionnée parmi respectivement un premier ensemble de données (116r) disponibles dans la station émettrice et d'un deuxième ensemble de données disponibles dans les stations réceptrices, les données du premier ensemble de données(116e) et du deuxième ensemble de données (116r) étant identiques, les données du deuxième ensemble de données (116r) étant sélectionnées dans les stations réceptrices (100r) en fonction d'une commande de sélection contenant les adresses de sélection des données dans le deuxième ensemble de données (116r) homologues à celles sélectionnées dans le premier ensemble de données (116e), la commande de sélection (S) étant transmise périodiquement entre la station émettrice et les stations réceptrices.

3. Procédé selon l'une quelconque des revendications 1 ou 2, dans lequel les informations chiffrées(ECM) comportent des messages de contrôle d'accès vecteurs d'une clé de code (CW) utilisée pour le chiffrement et le déchiffrement d'un flux de données comprenant des données audio et/ou vidéo transmises entre la station émettrice et les stations réceptrices.

4. Procédé selon l'une quelconque des revendications 1 à 3, dans lequel le message (EMM) est un message de gestion d'accès chiffrée par une quatrième clé (Kcl) dite « clé client ».

5. Procédé selon la revendication 1, dans lequel les informations chiffrées comportent des données audio et/ou vidéo.

6. Procédé selon la revendication 1, dans lequel la commande de sélection (S) est transmise sans chiffrement.

7. Procédé selon la revendication 1, dans lequel la commande de sélection (S) est chiffrée.

8. Système de transmission d'informations entre une station émettrice (100e) et une pluralité de stations réceptrices (100r) comprenant dans la station émettrice au moins un dispositif (114e) de chiffrement d'informations avec une première clé et, dans chaque station réceptrice, un dispositif de déchiffrement (114r) selon la même clé ou une clé sensiblement identique, **caractérisé en ce que** chaque station réceptrice comprend des moyens pour établir la première clé à partir d'une deuxième clé transmise depuis la station émettrice (K'exp) et d'au moins une donnée sélectionnée parmi un ensemble de données mémorisées (116n), en fonction d'un signal de sélection émis par la station émettrice.

9. Système selon la revendication 8 **caractérisé en ce que** la première clé est établie dans les stations émettrice et réceptrices à partir de la deuxième clé (K'exp) et d'au moins une donnée sélectionnée parmi respectivement un premier ensemble de données (116r) mémorisées disponibles dans la station émettrice et d'un deuxième ensemble de données mémorisées disponibles dans les stations réceptrices, les données du premier ensemble de données(116e) et du deuxième ensemble de données (116r) étant identiques, les données du deuxième ensemble de données (116r) étant sélectionnées dans les stations réceptrices (100r) en fonction d'un signal de sélection (S) contenant les adresses de sélection des données dans le deuxième ensemble de données (116r) homologues à celles sélectionnées dans le premier ensemble de données (116e), le signal de sélection étant émis par la station émettrice.

10. Système selon la revendication 9, dans lequel la première clé est une clé d'exploitation (Kexp) et les informations chiffrées comportent des messages de contrôle d'accès (ECM) vecteurs d'une d'une clé de code(CW) utilisée pour le chiffrement d'un flux de données comprenant des données audio et/ou vidéo.

11. Système selon la revendication 10, dans lequel la clé de code CW est une clé de chiffrement/déchiffrement de données audio et/ou vidéo et dans lequel le flux de donné comporte des données audio et/ou vidéo.

12. Système selon la revendication 11, dans lequel chaque station réceptrice comporte une mémoire réinscriptible (116r) pour le stockage d'un ensemble de données susceptibles d'être sélectionnées pour établir la première clé de chiffrage.

13. Système selon l'une quelconque des revendications 8 à 12, dans lequel la station émettrice est une station de télédiffusion et dans lequel les stations réceptrices sont des récepteurs/décodeurs de télévision payante.

14. Station réceptrice pour un système de transmission d'informations du type comprenant une station émettrice (100e) et au moins une station réceptrice (100r), dans lequel on transmet de la station émettrice vers les stations réceptrices des informations chiffrées (ECM) avec une première clé (Kexp), et au moins un message (EMM) vecteur d'une deuxième clé (K'exp), et dans lequel on déchiffre les informations chiffrées dans les stations réceptrices au moyen de la première clé (Kexp) ou d'une clé sensiblement identique à la première clé **caractérisé en ce que** ladite station réceptrice (100r) comprend des moyens (122r) pour établir la première clé (Kexp) à partir de la deuxième clé (K'exp) transmise depuis la station émettrice, la première clé (Kexp) étant établie dans la station émettrice et la station réceptrice à partir de la deuxième clé (K'exp) et d'au moins une donnée sélectionnée parmi respectivement un premier ensemble de données (116e) et un deuxième ensemble de données (116r) identiques mémorisées dans les stations émettrices et réceptrice, les données du deuxième ensemble de données (116r) étant sélectionnées dans les stations réceptrices (100r) par des moyens de sélection sensibles à un signal de sélection (S) émis par la station émettrice contenant des adresses de sélection des données dans le deuxième ensemble de données (116r) homologues à celles sélectionnées dans le premier ensemble de données (116e).

15. Station réceptrice selon la revendication 14, dans laquelle les moyens de sélection comportent une table de pointeurs (117r) dirigés vers des adresses de mémoire.

16. Station réceptrice selon la revendication 14, dans laquelle l'ensemble de données mémorisées susceptibles d'être sélectionnées, comprend des données d'identification de ladite station.

## Claims

1. A method for the transfer of information between a transmitter (100e) and a plurality of receivers (100r), where a transmission is made from the transmitter to the receivers, said transmission comprising information encrypted by a first key (Kexp) and at least one message (EMM) containing a second key (K'exp), and where a decryption of the encrypted information is carried out in the receivers using the first key or a key which is appreciably identical to first key, **characterised in that** the first key (Kexp), or the key which is appreciably identical to the first key, is generated in the receivers using the second key (K'exp) and at least one datum selected from a set of data (116n) available in the receivers, according to a selection command periodically transmitted between the transmitter and the receivers.

2. The method of claim 1 **characterised in that** the first key (Kexp), or the key which is appreciably identical to the first key, is generated in the transmitter and in the receivers using the second key (K'exp) and at least one datum selected from a first set of data (116r) available in the transmitter and from a second set of data available in the receivers respectively, the data in the first set (116e) and in the second set (116r) being identical, the data in the second set (116r) being selected from the receivers (100r) according to a selection command containing the selection addresses of data in the second set of data (116e), the selection command (S) being periodically transmitted between the transmitter and the receivers.

3. The method of either of claims 1 or claim 2 **characterised in that** the encrypted information (ECM) comprises access control messages containing a coding key (CW) used in the decrypting and encrypting of a data stream comprising audio/video data transmitted between the transmitter and the receivers.

4. The method of according to any one of the claims 1 to 3 **characterised in that** the message (EMM) is an access management message encrypted by a fourth key (Kcl) called the "user key".

5. The method of claim 1 **characterised in that** the encrypted information comprises audio/video data.

6. The method of claim 1 **characterised in that** the selection command (S) is transmitted without encryption.

7. The method of claim 1 **characterised in that** the selection command (S) is encrypted.

8. A system for the transmission of information between a transmitter (100e) and a plurality of receivers (100r), said transmitter comprising a data encryption device using a first key, each of said plurality of receivers comprising a decryption device (114r) using the same key or a key which is appreciably identical to the first key, **characterised in that** each receiver comprises a means for generating the first key using a second key transmitted by the transmitter (K'exp) and at least a datum chosen from a set of stored data (116r) according to a selection signal issued by the transmitter.

9. The system according to claim 8 **characterised in that** the first key is generated in the transmitters and in the receivers using the second key (K'exp) and at least one datum chosen respectively from a first set of data (116r) stored in the transmitter and from a second set of data stored in the receivers, said data from the first set (116e) and from the second set (166r) being identical, the data from the second set (116r) being chosen in the receivers (100r) according to a selection signal (S) containing the selection addresses of the data in the second set of data (116r) a to those chosen in the first set of data (116e), the selection signal being issued by the transmitter.

10. The system of claim 9 **characterised in that** the first key (Kexp) and the encrypted information comprise control messages (ECM) containing control words (CW) used to encrypt a data stream comprising audio/video data.

11. The system of claim 10 **characterised in that** the control word (CW) is an audio/video encryption key and in which the data stream contains audio/video data.

12. The system of claim 11 **characterised in that** each receiver comprises a rewritable memory (116r) for storing a set of data for use in generating the first encryption key.

13. The system according to an one of the claims 8 to 12 **characterised in that** the transmitter is a television broadcasting station and wherein the receivers are pay TV receiver/decoders.

14. A receiver for a data transmission system of type comprising a transmitter (100e) and at least one receiver (100r), wherein data (ECM) encrypted by a first key (Kexp) and at least one message (EMM) containing a second key (K'exp) is transmitted from the transmitter to the receivers, and wherein the encrypted data is decrypted in the receivers using the first key (Kexp) or a key which is appreciably identical to the first key **characterised in that** said receiver (100r) comprises a means (122r) for generating the first key (Kexp) using the second key (K'exp) transmitted by the transmitter, the first key (Kexp) being generated in the transmitter and in the receiver using the second key (K'exp) and at least one datum chosen respectively from a first set of data (116e) and an identical second set of data (116r) stored in the transmitter and the receivers, the data from the second set (116r) being chosen from the receivers (100r) by a selection means according to a selection signal (S) issued by the transmitter containing selection addresses of the data in the second set (116r) corresponding to those chosen in the first set of data (116e).

15. The receiver of claim 14 **characterised in that** the selection means comprises a table of pointers (117r) pointing to memory addresses.

16. The receiver of claim 14 **characterised in that** the set of stored data for selection comprises information identifying said receiver.

## Patentansprüche

1. Verfahren zur Datenübermittlung zwischen einer Sendestation (100e) und einer Mehrzahl von Empfangsstationen (100r), bei dem mit einem ersten Schlüssel (Kexp) kodierte Daten sowie zumindest eine Nachricht (EMM), die Träger eines zweiten Schlüssels (K'exp) ist, von der Sendestation zu den Empfangsstationen übermittelt werden, und bei dem die kodierten Daten in den Empfangsstationen mit dem ersten Schlüssel oder einem mit dem ersten Schlüssel im Wesentlichen identischen Schlüssel dekodiert werden, **dadurch gekennzeichnet, dass** der erste Schlüssel (Kexp) oder der mit dem ersten Schlüssel im Wesentlichen identische Schlüssel in den Empfangsstationen aus dem zweiten Schlüssel (K'exp) und zumindest einem Datensatz erstellt wird, der in Abhängigkeit von einem Auswahlbefehl, der periodisch zwischen der Sendestation und den Empfangsstationen übermittelt wird, aus einer Gruppe von Datensätzen (116r) ausgewählt wird, die in den Empfangsstationen verfügbar sind.

2. Verfahren nach Anspruch 1, **dadurch gekennzeichnet, dass** der erste Schlüssel (Kexp) oder der mit dem ersten Schlüssel im Wesentlichen identische Schlüssel in den Sende- und Emfangsstationen aus dem zweiten Schlüssel (K'exp) und zumindest einem Datensatz erstellt wird, der aus einer ersten Gruppe von Datensätzen (116r), die in der Sendestation verfügbar sind, und einer zweiten Gruppe von Datensätzen, die in den Empfangsstationen verfügbar sind, ausgewählt wird, wobei die Datensätze der ersten Gruppe (116e) von Datensätzen und der zweiten Gruppe (116r) von Datensätzen identisch sind, die Datensätze der zweiten Gruppe (116r) von Datensätzen in den Empfangsstationen (110r) in Abhängigkeit von einem Auswahlbefehl ausgewählt werden, der die Auswahladressen der Datensätze in der zweiten Gruppe (116r) von Datensätzen enthält, die mit den aus der ersten Gruppe (116e) von Datensätzen ausgewählten gleichlautend sind, wobei der Auswahlbefehl (S) periodisch zwischen der Sendestation und den Empfangssstationen übermittelt wird.

3. Verfahren nach einem der Ansprüche 1 und 2, bei dem die kodierten Daten (ECM) Zugriffskontrollnachrichten umfassen, die Träger eines Kodeschlüssels (CW) sind, der für die Kodierung und Dekodierung eines Datenstromes verwendet wird, der Audio- und/oder Videodaten umfasst, die zwischen der Sendestation und den Empfangsstationen übermittelt werden.

4. Verfahren nach einem der Ansprüche 1 bis 3, bei dem die Nachricht (EMM) eine Zugriffsverwaltungsnachricht (EMM) ist, die mit einem als "Klientenschlüssel"bezeichneten vierten Schlüssel (Kcl) kodiert ist.

5. Verfahren nach Anspruch 1, bei dem die kodierten Daten Audio- und/oder Videodaten umfassen.

6. Verfahren nach Anspruch 1, bei dem der Auswahlbefehl (S) ohne Kodierung übermittelt wird.

7. Verfahren nach Anspruch 1, bei dem der Auswahlbefehl (S) kodiert wird.

8. System der Datenübermittlung zwischen einer Sendestation (100e) und einer Mehrzahl von Empfangsstationen (100r) mit zumindest einer Vorrichtung (114e) für die Datenkodierung mit einem ersten Schlüssel in der Sendestation und einer Vorrichtung für die Dekodierung (114r) mit dem gleichen Schlüssel oder einem im Wesentlichen identischen Schlüssel in jeder Empfangsstation, **dadurch gekennzeichnet, dass** jede Empfangsstation Mittel umfasst, um den ersten Schlüssel aus einem von der Sendestation übermittelten zweiten Schlüssel (K'exp) und zumindest einem Datensatz zu erstellen, der in Abhängigkeit von einem Auswahlsignal, das von der Sendestation übermittelt wird, aus einer Gruppe (116r) von gespeicherten Datensätzen ausgewählt wird.

9. System nach Anspruch 8, **dadurch gekennzeichnet, dass** der erste Schlüssel in der Sendestation und in den Empfangsstationen aus dem zweiten Schlüssel (K'exp) und zumindest einem Datensatz erstellt wird, der aus einer ersten Gruppe (116r) von Datensätzen, die gespeichert in der Sendestation verfügbar sind, und einer zweiten Gruppe von Datensätzen, die gespeichert in den Empfangsstationen verfügbar sind, ausgewählt wird, wobei die Datensätze der ersten Gruppe (116e) von Datensätzen und der zweiten Gruppe (116r) von Datensätzen identisch sind, die Datensätze der zweiten Gruppe (116r) von Datensätzen in den Empfangsstationen (100r) in Abhängigkeit von einem Auswahlbefehl (S) ausgewählt werden, der die Auswahladressen der Datensätze in der zweiten Gruppe (116r) von Datensätzen enthält, die mit den aus der ersten Gruppe (116e) von Datensätzen ausgewählten gleichlautend sind, wobei der Auswahlbefehl (S) von der Sendestation übermittelt wird.

10. System nach Anspruch 9, bei dem der erste Schlüssel ein Nutzungsschlüssel (Kexp) ist und die kodierten Daten Zugriffskontrollnachrichten (ECM) umfassen, die Träger eines Kodeschlüssels (CW) sind, der für die Kodierung eines Datenstromes verwendet wird, der Audio- und/oder Videodaten umfasst.

11. System nach Anspruch 10, bei dem der Kodeschlüssel CW ein Schlüssel für die Kodierung/Dekodierung von Audio- und/oder Videodaten ist und bei dem der Datenstrom Audio- und/oder Videodaten umfasst.

12. System nach Anspruch 11, bei dem jede Empfangsstation einen wiederbeschreibbaren Speicher (116r) für die Speicherung einer Gruppe von Datensätzen umfasst, die geeignet sind, ausgewählt zu werden, um den ersten Kodierschlüssel zu erstellen.

13. System nach einem der Ansprüche 8 bis 12, bei dem die Sendestation eine Fernsehsendestation ist und bei dem die Empfangsstationen Gebührenfernsehempfänger bzw. -dekodierer sind.

14. Empfangsstation für ein System der Datenübermittlung des Typs, der eine Sendestation (100e) und zumindest eine Empfangsstation (100r) umfasst, bei dem mit einem ersten Schlüssel (Kexp) kodierte Daten und zumindest eine Nachricht (EMM), die Träger eines zweiten Schlüssels (K'exp) ist, von der Sendestation zu den Empfangsstationen übermittelt werden, und bei dem die kodierten Daten in den Empfangsstationen mittels des ersten Schlüssels (Kexp) oder eines mit dem ersten Schlüssel im Wesentlichen identischen Schlüssels dekodiert werden, **dadurch gekennzeichnet, dass** die Empfangsstation (100r) Mittel (122r) umfasst, um den ersten Schlüssel (Kexp) aus dem von der Sendestation übermittelten zweiten Schlüssel (K'exp) zu erstellen, wobei der erste Schlüssel (Kexp) in der Sendestation und in der Empfangsstation aus dem zweiten Schlüssel (K'exp) und zumindest einem Datensatz erstellt wird, der aus einer ersten Gruppe (116e) von Datensätzen bzw. einer zweiten Gruppe (116r) von Datensätzen ausgewählt wird, die identisch und in den Sende- und Empfangsstationen gespeichert sind, wobei die Datensätze der zweiten Gruppe (116r) von Datensätzen in den Empfangsstationen (100r) durch Auswahlmittel ausgewählt werden, die auf ein Auswahlsignal (S) ansprechen, das von der Sendestation gesendet wird und Auswahladressen für die Datensätze in der zweiten Gruppe (116r) von Datensätzen enthält, die mit den in der ersten Gruppe (116e) von Datensätzen ausgewählten gleichlautend sind.

15. Empfangsstation nach Anspruch 14, in der die Auswahlmittel eine Tabelle (117r) von Zeigern umfassen, die zu den Speicheradressen weisen.

16. Empfangsstation nach Anspruch 14, in der die Gruppe von gespeicherten Datensätzen, die geeignet sind ausgewählt zu werden, Datensätze zur Identifikation dieser Station umfasst.
